# EUROPÄISCHE PATENTANMELDUNG

(11) **EP 1 002 766 A2**
(43) Veröffentlichungstag der Anmeldung: **24.05.2000**
(21) Anmeldenummer: 99121364.6
(22) Anmeldetag: 27.10.1999
(51) Int. Cl.: C02F 1/46

(54) **Verfahren zum elektrochemischen oxidativen Abbau organischer Verbindungen**

(30) Priorität: 02.11.1998 DE 19850318
(71) Anmelder: Forschungszentrum Karlsruhe GmbH, 76133 Karlsruhe (DE); EILENBURGER ELEKTROLYSE- UND UMWELTTECHNIK GMBH, D-04838 Eilenburg (DE)
(72) Erfinder: Thiele, Wolfgang, Dr., 04838 Eilenburg (DE); Wildner, Knut, 04838 Eilenburg (DE); Bringmann, Jan, Dr., 76227 Karlsruhe (DE); Galla, Ulrich, 76689 Karlsdorf-Neuthard (DE)
(74) Vertreter: Rückert, Friedrich, Dr.

(57) **Zusammenfassung**

Die Erfindung betrifft ein Verfahren zum elektrochemischen oxidativen Abbau organischer Verbindungen. Dieses Verfahren soll so gestaltet werden, daß eine Freisetzung von nitrosen Gasen vermieden wird und statt dessen ein unmittelbar verwendbarer Wertstoff entsteht. Erfindungsgemäß wird ein Verfahren vorgeschlagen, bei dem
- eine Elektrolysezelle mit einem Anoden- und einem Kathodenraum eingesetzt wird,
- ein Anolyt hergestellt und durch den Anodenraum geleitet wird, indem die organischen Verbindungen in einer mindestens 3-molaren wäßrigen Salpetersäurelösung, die Silberionen enthält, aufgelöst oder dispergiert werden,
- ein Katolyt bestehend aus einer 0,3 bis 10 molaren Schwefelsäure oder einer 0,3 bis 1-molaren Salpetersäure hergestellt und durch den Kathodenraum geleitet wird, wobei die infolge einer elektrochemischen Überführung durch die Membran hindurchtretenden Silberionen auf der Kathode bei einer Stromdichte im Bereich zwischen 0,05 und 0,5 A/cm² als metallisches Silber abgeschieden werden und
- das auf der Kathode abgeschiedene metallische Silber in Intervallen entfernt wird.

## Beschreibung

Die Erfindung betrifft ein Verfahren zum elektrochemischen oxidativen Abbau organischer Verbindungen gemäß dem ersten Patentanspruch.

Aus der EP 0 297 738 A1 ist ein Verfahren zur elektrochemischen Oxidation von organischen Verbindungen bekannt. Bei diesem Verfahren wird eine ringförmig geschlossene Elektrolysezelle verwendet, die aus zwei senkrechten Teilstücken und zwei waagerechten Verbindungsstücken besteht. In eines der senkrechten Teilstücke taucht eine rohrförmige Anode ein, in deren Innenraum ein rohrförmiger poröser Separator eingesetzt ist, der an seinem unteren Ende abgeschlossen ist. Der Separator kann beispielsweise aus einer Ionenaustauschermembran aus sulfoniertem Fluorpolymer ("Nafion") bestehen. Im Innenraum dieses Separators ist eine zylinderförmige Kathode eingesetzt. Die elektrochemische Oxidation der organischen Verbindungen verläuft indirekt über Silbersalze als Oxidationsmediatoren. Bei Temperaturen oberhalb von 50°C können die organischen Verbindungen in einer salpetersäurehaltigen Lösung mit Hilfe von anodisch gebildeten Silber-II-Ionen vollständig bis zum Kohlendioxid aufoxidiert werden. Bei diesem Verfahren muß kathodisch eine mindestens 7-molare Salpetersäurelösung eingesetzt werden. Nur bei dieser hohen Salpetersäurekonzentration ist es möglich, die durch den Separator zur Kathode überführten Silberionen in Lösung zu halten.

Bei geringerer Salpetersäurekonzentration verstopft der Kathodenbereich relativ schnell durch abgeschiedenes metallisches Silber. Außerdem kann das metallische Silber eine Brücke bis zum Separator bilden, wodurch der Separator beschädigt wird. Der entscheidende Nachteil ist jedoch, daß infolge der hohen Salpetersäurekonzentration im Kathodenbereich die Salpetersäure mit hoher Stromausbeute zu NOₓ reduziert wird. Das gebildete NOₓ wird bei diesem Verfahren als Abgas aus der Elektrolysezelle ausgetragen. Die Absorption und gegebenenfalls die Reoxidation von NOₓ zu einer wieder verwendbaren Salpetersäure verursacht einen beträchtlichen apparativen Aufwand.

Ein ähnliches Verfahren ist aus der Veröffentlichung von D. F. Steele, J. P. Wilks und W. Batey: "The Electrochemical Destruction of Waste Reprocessing Solvent and Ion Exchange Resins" in den Proceedings of the 1992 Incineration Conference, Albuquerque, New Mexico, May 11-15, 1992, 167-174 bekannt. Bei diesem Verfahren wird eine Elektrolysezelle eingesetzt, die durch eine Membran aus einem Fluoropolymer-Kationenaustauscher ("Nafion") in einen Anoden- und einen Kathodenraum getrennt ist, durch die eine salpetersaure Anolyt- und eine Katolyt-Lösung im Kreislauf geführt werden. Auch bei diesem Verfahren wird kathodisch NOₓ freigesetzt, das in weiteren Verfahrensschritten mit Luft oder Sauerstoff wieder zu Salpetersäure oxidiert wird.

Die DE 44 19 683 A1 beschreibt eine bipolare Filterpressenzelle für anodische Oxidationen am Platin, die sich unter anderem zum Abbau von organischen Schadstoffen in Prozeßlösungen und Abwässern eignet. Bei dieser Filterpressenzelle sind Anoden- und Kathodenräume durch eine Kunststoffmembran, etwa eine Ionenaustauschermembran, voneinander getrennt. Die Oxidation der Schadstoffe erfolgt entweder durch direkte anodische Oxidation am Platin oder indirekt über anodisch gebildetes Peroxodisulfat, das dabei zum Sulfat reduziert und anodisch wieder regeneriert wird.

Der Erfindung liegt die Aufgabe zugrunde, ein Verfahren zum elektrochemischen oxidativen Abbau organischer Verbindungen vorzuschlagen, bei dem der oxidative Abbau in salpetersaurer Lösung indirekt unter Einsatz von Silberionen als Mediatoren erfolgt. Das Verfahren soll so geführt werden, daß die Reduktion von Salpetersäure zu nitrosen Gasen einschließlich der damit verbundenen Nachteile vermieden wird. Anstelle von nitrosen Gasen soll ein Wertstoff freigesetzt werden, der unmittelbar und ohne weitere Behandlung nutzbar ist.

Die Aufgabe wird erfindungsgemäß durch das im ersten Patentanspruch beschriebene Verfahren gelöst. In den weiteren Patentansprüchen sind bevorzugte Ausgestaltungen des Verfahrens angegeben.

Erfindungsgemäß wird eine Elektrolysezelle mit einer Anode und einer Kathode eingesetzt, die durch eine selektiv für Kationen durchlässige Membran in einen Anoden- und einen Kathodenraum getrennt ist. Eine für das Verfahren geeignete Elektrolysezelle ist in der eingangs erwähnten DE 44 19 683 A1 beschrieben. Für die Anode wird bevorzugt ein Material gewählt, das eine hohe Überspannung gegenüber der Entwicklung von Sauerstoff aufweist, um die Sauerstoffbildung zu unterdrücken. Ein geeignetes Anodenmaterial ist insbesondere Platin. Anstelle von reinem Platin als Elektrodenmaterialien eignen sich mit Platin beschichtete Titanelektroden. Als Kathodenmaterial können die üblichen Materialien wie z. B. Graphit, Titan oder Platin eingesetzt werden. Bevorzugt wird amorpher Glaskohlenstoff, der den Vorteil hat, daß sich darauf Silber ebenfalls amorph abscheidet und somit leicht wieder entfernbar ist. Die selektiv für Kationen durchlässige Membran besteht vorzugsweise aus einem Kationenaustauscher wie z. B. dem sulfonierten Fluorpolymer mit dem Handelsnamen Nafion.

Als Anolyt wird eine mindestens 3-molare wäßrige Salpetersäurelösung eingesetzt, in der die organischen Verbindungen gelöst oder dispergiert werden und die Silberionen, vorzugsweise 30 bis 100 g/l Silbernitrat, enthält. Der Anolyt wird bevorzugt mit einer Strömungsgeschwindigkeit im Bereich zwischen 0,1 und 1,0 m/s, vorzugsweise zwischen 0,2 und 0,4 m/s, im Kreislauf durch den Anodenraum geleitet, wobei die organischen Verbindungen kontinuierlich oder diskontinuierlich zugesetzt werden.

Der Katolyt kann aus einer 0,3- bis 10-molaren Schwefelsäure bestehen. Bei höheren oder niedrigeren Schwefelsäurekonzentrationen ist die erforderliche elektrische Leitfähigkeit nicht mehr gewährleistet. Alternativ kann eine stark verdünnte, 0,3 bis 1-molare Salpetersäure eingesetzt werden. Der Katolyt wird vorzugsweise im Kreislauf über eine Trennvorrichtung geführt, wobei die durch elektrische Überführung durch die Membran übertretenden Silberionen bei Stromdichten von 0,05 bis 0,5 A/cm² kathodisch in Form von metallischem Silberpulver abgeschieden werden. Niedrigere Stromdichten erweisen sich als unwirtschaftlich, während bei höheren Stromdichten die Gefahr einer Beschädigung der Membran besteht. Die Betriebsspannung der Elektrolysezelle stellt sich in Abhängigkeit von der elektrischen Leitfähigkeit und der Stromdichte ein. Es hat sich gezeigt, daß die Abscheidung des Silbers auf der Kathode in Form eines Metallpulvers bei Strömungsgeschwindigkeiten des Katolyten von 0,1 bis 0,4 m/s besonders effektiv ist. Bei höheren Strömungsgeschwindigkeiten kommt es leicht zur Ausbildung fester haftender Silberabscheidungen. Die bevorzugten niedrigen Strömungsgeschwindigkeiten reichen jedoch nicht dazu aus, das Silberpulver kontinuierlich aus dem Kathodenraum in die Trennvorrichtung zu überführen.

Deshalb erfolgt die Überführung des kathodisch kontinuierlich abgeschiedenen Silberpulvers in die Trennvorrichtung vorzugsweise durch intervallartige, kurzzeitige Erhöhung der Strömungsgeschwindigkeit des Katolyten auf das 2- bis 10-fache der angegebenen Strömungsgeschwindigkeit. Bevorzugt wird eine ca. 2 bis 10 Sekunden dauernde intervallartige Erhöhung der Strömungsgeschwindigkeit, wobei die Intervalle im zeitlichen Abstand von ca. 0,5 bis 5 Minuten eingestellt werden.

Das in der Trennvorrichtung abgeschiedene Silberpulver kann in der Anolytlösung oder in der zur Ergänzung der Verluste zuzusetzenden Salpetersäure aufgelöst und in dieser Form dem Anolyten wieder zugemischt werden. Salpetersäureverluste können sich dadurch ergeben, daß ein geringer Teil der Salpetersäure durch Diffusion in den Katolytkreislauf gelangt und dort reduziert wird. Bei einem Kreislaufbetrieb des Katolyten stellen sich bedingt durch die sehr niedrige Nitratkonzentration stationäre Konzentrationen an Nitrit und an Ammonium ein, die sich zu Stickstoff umsetzen und mit dem Kathodengas austreten. Nitrose Gase entstehen dabei nicht.

Das Hauptreaktionsprodukt der Kathodenreaktion ist jedoch in jedem Fall Wasserstoff. Der allenfalls mit geringen Mengen an Stickstoff verunreinigte Wasserstoff kann unmittelbar als Wertstoff wiederverwendet werden.

Wird als Katolyt verdünnte Schwefelsäure eingesetzt, sollte darauf geachtet werden, daß die Diffusion der Schwefelsäure in den Anolytkreislauf gering gehalten wird. Deshalb werden bevorzugt Kationenaustauschermembranen eingesetzt, die einen erhöhten Diffusionswiderstand aufweisen. Alternativ kann die Elektrolysezelle mit einer Doppelmembran ausgestattet werden, wobei zwischen den beiden Membranen eine Zwischenkammer vorhanden ist, die in einem separaten Kreislauf mit einer geringen Menge an Spülflüssigkeit, etwa einer Salpetersäurelösung, durchströmt wird. In dieser Spülflüssigkeit reichert sich Schwefelsäure durch Diffusion aus dem Kathodenraum an. Wird als Spülflüssigkeit eine Salpetersäurelösung verwendet, kann die mit Schwefelsäure angereicherte Salpetersäurelösung in den Katolytkreislauf überführt werden, allerdings auf Kosten eines größeren Verlusts an Salpetersäure durch deren kathodische Reduktion über Ammonium und Nitrit zu Stickstoff.

Eine zu starke Anreicherung von Schwefelsäure im Anolytkreislauf kann auch dadurch verhindert werden, daß das sich bildende schwerlösliche Silbersulfat durch Kühlung auskristallisiert und aus dem Anolytkreislauf abgetrennt wird. Es wurde gefunden, daß die Löslichkeit des Silbersulfats in Salpetersäure um ein Vielfaches höher ist als in Wasser und mit sinkender Temperatur abnimmt. So beträgt die Löslichkeit in einer 6-molaren Salpetersäure bei 50°C 99 g/l. Beim Abkühlen auf 0°C sinkt die Löslichkeit auf 57 g/l ab, so daß es zur Auskristallisation von 42 g/l Silbersulfat kommt. Das Silbersulfat kann dem Katholytkreislauf wieder zugesetzt werden, wobei es sich dort auflöst und das Silber als Metall unter Freisetzung von Schwefelsäure kathodisch abgeschieden und rückgewonnen wird.

Für den Fall, daß die organischen Verbindungen Chlor als Heteroatom enthalten, kommt es bei deren oxidativem Abbau zu einer Anreicherung von anorganischen Chlorverbindungen im Anolyten. Es wurde gefunden, daß je nach Reaktionsführung das Chlor wahlweise bis zum Perchlorat aufoxidiert werden kann, welches dann z. B. als Kaliumperchlorat durch Kühlungskristallisation aus dem Anolyten abgetrennt werden kann, oder - bei nur geringem Überschuß an Silber-II-Ionen - das Chlor als Silberchlorid ausfällt. Das Silberchlorid kann in geeigneter Weise, z. B. durch einen Zyklonabscheider oder durch einen über einen Filter geleiteten Teilstrom des Anolyten, aus dem Kreislauf abgetrennt werden. Das abgetrennte Silberchlorid kann in bekannter Weise zu metallischem Silber aufgearbeitet und dem Anolytkreislauf wieder zugeführt werden. Eine Möglichkeit dazu besteht in der Behandlung des Silberchlorids mit Salzsäure und Zinkgranalien, wobei unter Wasserstoffentwicklung Silberpulver neben Zinkchlorid entsteht. Eine zweite Möglichkeit besteht darin, das Silberchlorid in etwa 10%-iger Ammoniaklösung aufzulösen (Löslichkeit bei Raumtemperatur ca. 72 g AgCl/l) und das Silber aus dieser Lösung kathodisch abzuscheiden.

Die Erfindung wird im folgenden anhand von Ausführungsbeispielen und einer Figur näher erläutert.

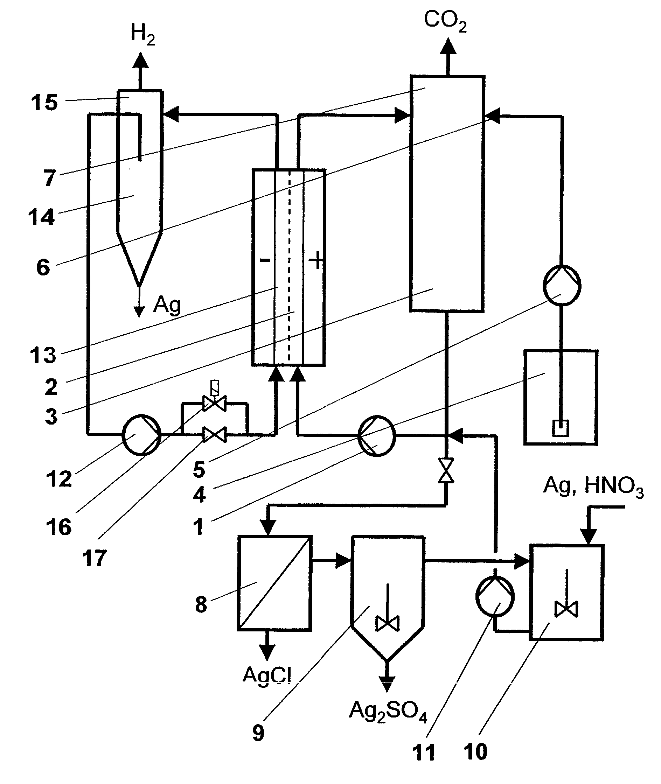

Die Figur zeigt ein Verfahrensfließbild einer Technikumsanlage, in der eine bevorzugte Ausführungsform des Verfahrens durchgeführt wurde.

Die nachfolgend angegebenen Ausführungsbeispiele wurden in der in der Figur schematisch dargestellten Technikumsanlage durchgeführt. Es wurde eine bipolare, nach dem Filterpressenprinzip aufgebaute Oxidations-Elektrolysezelle, wie sie in der eingangs zitierten DE 44 19 683 A1 beschrieben ist, eingesetzt. Der Spannrahmen der Elektrolysezelle enthält zwei Randelektrolyseplatten mit Stromzuführung und eine bipolare Elektrodenplatte. Die Elektrodengrundplatten bestehen aus imprägniertem Graphit mit eingearbeiteten Kathodenräumen und Kühlkanälen. Anodenseitig sind, durch eine Isolierplatte aus Kunststoff vom Graphit getrennt, querliegende Platinfolienelektroden aufgebracht. Die Anodenräume werden durch Dichtrahmen aus elastischem Kunststoff gebildet. Im Bereich der Dichtrahmen erfolgt auch die Kontaktierung der Platinfolienanoden mit dem Graphitgrundkörper. Die in dieser Weise ausgebildeten beiden bipolaren Einheiten verfügen über je ca. 600 cm² wirksame Platinoberfläche. Elektrolysiert wurde mit 2 x 300 A entsprechend einer anodischen Stromdichte von 0,5 A/cm. Die Membran bestand aus dem Kationenaustauscher Nafion 450.

Der Anolyt wird mittels der Umlaufpumpe 1 über die Anodenräume 2 und den nachgeschalteten Reaktor 3, der gleichzeitig als Gasabscheider ausgebildet ist, im Kreislauf umgepumpt. Der Reaktor ist so ausgelegt, daß die Verweilzeit im Bereich von mehreren Minuten liegt. Das Konzentrat der organischen Verbindungen wird aus dem Vorratsgefäß 4 mittels der Dosierpumpe 5 in den Anolytkreislauf nach der Zelle bei 6 eindosiert. Die hauptsächlich aus CO2 bestehenden Anodengase werden am oberen Ende 7 des Reaktors abgeführt. Ein Teil des Anolyten wird zur Regenerierung aus dem Kreislauf entfernt. Im Filter 8 wird zunächst das Silberchlorid neben anderen möglicherweise vorhandenen festen Verunreinigungen abgetrennt. Danach wird der Anolyt im Kühlungskristallisator 9 auf 0°C bis 10°C abgekühlt, wobei ein Teil des Sulfats als Silbersulfat auskristallisiert. Die vom Kristallisat abgetrennte Lösung wird im Lösegefäß 10 durch Zusatz von Silberpulver und erforderlichenfalls von Salpetersäure auf die gewünschten Konzentrationen an Silbernitrat und Salpetersäure gebracht und mittels der Dosierpumpe 11 dem Anolytkreislauf wieder zugeführt.

Der Katolyt wird mittels der Umlaufpumpe 12 über die Kathodenräume 13 und die Trennvorrichtung 14, die im vorliegenden Fall als Trennzyklon ausgebildet ist, ebenfalls im Kreislauf geführt. Im oberen Bereich 15 des Trennzyklons erfolgt auch die Abtrennung des kathodisch gebildeten Wasserstoffs. Beim normalen Elektrolysebetrieb bleibt das Magnetventil 16 geschlossen und mit dem Stellventil 17 wird der Katolytumlauf so weit gedrosselt, daß sich in den Kathodenräumen eine Strömungsgeschwindigkeit von etwa 0,1 m/s einstellt. Unter diesen Bedingungen scheidet sich das elektrochemisch überführte Silber als Metallpulver ab. Diese geringe Strömungsgeschwindigkeit reicht aber nicht dazu aus, das Silberpulver aus den Kathodenräumen auszutragen. Deshalb wird periodisch das Magnetventil geöffnet und dadurch die Strömungsgeschwindigkeit um ein Mehrfaches erhöht. Dadurch wird das Silberpulver in den Trennzyklon gespült und dort abgetrennt. Das abgeschiedene Silberpulver wird dem Anolyten über das Lösegefäß wieder zugeführt.

Als Katolyt diente eine ca. 5-molare Schwefelsäure, als Anolyt eine ca 6-molare Salpetersäure mit 0,5 Mol/l entsprechend 85 g/l Silbernitrat. Die Elektrolyse wurde bei 50°C bis 60°C durchgeführt. Nach kurzer Zeit (ca. 5 Sekunden) färbte sich der Anolytaustritt aus der Zelle dunkelbraun. Nun wurde mit der Dosierung der Konzentrate der organischen Verbindungen, z. B. hochchlorierter Kohlenwasserstoffe, begonnen. Die Dosiermengen wurden so eingestellt, daß sich die Anolytlösung bis zum Reaktoraustritt nahezu entfärbte. Bezogen auf den Elektrolysestrom und die eingespeisten Schadstoffmengen konnten bei Reinsubstanzen Stromausbeuten zwischen 70 und 97 % erzielt werden. Bei Verwendung von chlorierten organischen Verbindungen wurde nach mehrstündigem Betrieb ein Teil des Anolyten durch Filtration von ausgefälltem Silberchlorid befreit und danach durch Kühlungskristallisation eine geringe Menge Silbersulfat zur Auskristallisation gebracht.

Das kathodisch abgeschiedene, sehr feine Silberpulver wurde in das Lösegefäß zurückgeführt und dort im Anolyten wieder aufgelöst. Das Silbersulfat wurde dem Katholyten zugegeben. Aus der abgeschiedenen Silbermenge von ca. 53 g/h ergibt sich, daß je Ah ca. 0,088 g Silber vom Anolyten in den Katolyten überführt wurden. Dies bedeutet, daß nur etwa 2,2 % des Elektrolysestroms durch Silberionen transportiert wurden. Die sich im umlaufenden Katolyten einstellende stationäre Silberkonzentration lag zwischen 0,1 und 0,3 g/l.

Als organische Verbindungen wurden die nachfolgend angegebenen Verbindungen eingesetzt, der spezifische Strombedarf und die Abbauraten, bezogen auf den Restgehalt an organisch gebundenem Kohlenstoff (TOC) im Anolytkreislauf, ermittelt.

### Beispiel 1

Es wurden mehrere reale Abfälle aus der chemischen Industrie mit unterschiedlicher Zusammensetzung behandelt, wobei sich die Prozentangaben (wie auch in den nachfolgenden Beispielen) auf Gewichtsprozent beziehen:
a) 70 % Benzoylchlorid, 10 Gew.-% Benzoesäureanhydrid, 8 % 2-,3- und 4-Chlorbenzoylchlorid, 3 % Trichlormethylbenzol, Rest: mehr als 20 weitere organische Verbindungen.
   Der spezifische Strombedarf betrug 4,35 kAh/kg; die Abbaurate lag bei 99.9 %.
b) 70 % Dichlorbenzol, 30 % Chlorbenzol.
   Der spezifische Strombedarf betrug 5,3 kAh/kg; die Abbaurate lag bei 99,9 %.
c) 90 % Chlorbenzol, Rest: Feststoffpartikel aus Methylendiphenylisocyanat und Methylendiphenylamid.
   Der spezifische Strombedarf betrug 5,5 kAh/kg; die Abbaurate lag bei 99,9 %.

### Beispiel 2

Es wurden Pestizide in Reinform eingesetzt, z. B. Pentachlorphenol und Lindan (1-,2-, 3-,4-, 5-, 6-Hexachlorcyclohexan).

Der spezifische Strombedarf betrug 3,9 kAh/kg, die Abbaurate lag bei 99,8 %.

### Beispiel 3

Es wurden langjährig überlagerte Pestizide eingesetzt:
a) 2, 3-Parathion-methyl spezifischer Strombedarf: 2,4 kAh/kg; Abbaurate: 99,1 %.
b) % Parathion-methyl spezifischer Strombedarf: 6,1 kAh/kg; Abbaurate 99,6 %.
c) % Dicofol spezifischer Strombedarf: 6,5 kAh/kg; Abbaurate 99,9 %.
d) % Bromophos spezifischer Strombedarf: 7,1 kAh/kg; Abbaurate 99,9 %.
e) % p,p-DDT spezifischer Strombedarf: ca. 10 kAh/kg; Abbaurate: 95 %.

### Beispiel 4

Es wurde Hochleistungstransformatorenöl eingesetzt, das nach Gebrauch ausgemustert worden war. Das Öl bestand aus 50 % tetra-bis octachlorierten Biphenylen und 50 % tri- und tetrachlorierten Benzolen.
Spezifischer Strombedarf: 4,55 kAh/kg, Abbaurate: 99 %.

## Patentansprüche

1. Verfahren zum elektrochemischen oxidativen Abbau organischer Verbindungen, bei dem
a) eine Elektrolysezelle mit einer Anode und einer Kathode eingesetzt wird, die durch eine selektiv für Kationen durchlässige Membran in einen Anodenraum und einen Kathodenraum getrennt ist,
b) ein Anolyt hergestellt wird, indem die organischen Verbindungen in einer mindestens 3-molaren wäßrigen Salpetersäurelösung, die Silberionen enthält, aufgelöst oder dispergiert werden,
c) der Anolyt durch den Anodenraum der Elektrolysezelle geleitet wird,
d) ein Katolyt bestehend entweder aus einer 0,3 bis 10 molaren Schwefelsäure oder einer 0,3 bis 1-molaren Salpetersäure hergestellt wird,
e) der Katolyt durch den Kathodenraum der Elektrolysezelle geleitet wird, wobei
f) die infolge einer elektrochemischen Überführung durch die Membran hindurchtretenden Silberionen auf der Kathode bei einer Stromdichte im Bereich zwischen 0,05 und 0,5 A/cm² als metallisches Silber abgeschieden werden und
g) das auf der Kathode abgeschiedene metallische Silber in Intervallen entfernt wird.

2. Verfahren nach Anspruch 1, bei dem
eine Anode aus einem solchen Material gewählt wird, das eine hohe Überspannung in Bezug auf die Entwicklung von Sauerstoff aufweist.

3. Verfahren nach Anspruch 1, bei dem eine Membran bestehend aus einem Kationenaustauscher eingesetzt wird.

4. Verfahren nach Anspruch 1, bei dem
der Anolyt Silbernitrat in einer Konzentration von 30 bis 100 g/l enthält.

5. Verfahren nach Anspruch 1, bei dem
der Anolyt mit einer Strömungsgeschwindigkeit im Bereich zwischen 0,1 und 1,0 m/s im Kreislauf durch den Anodenraum geleitet wird.

6. Verfahren nach Anspruch 1, bei dem
der Katolyt mit einer Strömungsgeschwindigkeit von 0,1 bis 0,4 m/s durch den Kathodenraum geleitet wird.

7. Verfahren nach Anspruch 6, bei dem
der Katolyt im Kreislauf durch den Kathodenraum geleitet wird, wobei in den Kreislauf eine Trennvorrichtung für metallisches Silber integriert wird und wobei das auf der Kathode abgeschiedene Silber in der Weise mobilisiert und in die Trennvorrichtung überführt wird, daß die Strömungsgeschwindigkeit im Kathodenraum diskontinuierlich und in kurzfristigen Intervallen auf das 2- bis 10-fache erhöht wird.
